# EUROPÄISCHE PATENTSCHRIFT

(11) **EP 1 423 293 B1**
(45) Veröffentlichungstag und Bekanntmachung des Hinweises auf die Patenterteilung: **14.06.2006**
(21) Anmeldenummer: 02758483.8
(22) Anmeldetag: 27.08.2002
(51) Int. Cl.: B60N 2/22

(54) **BESCHLAG FÜR EINEN FAHRZEUGSITZ**
FITTING FOR A VEHICLE SEAT
FERRURE POUR UN SIEGE DE VOITURE

(30) Priorität: 06.09.2001 DE 10144832; 21.12.2001 DE 20120768 U; 30.03.2002 DE 10214453
(43) Veröffentlichungstag der Anmeldung: 02.06.2004
(73) Patentinhaber: KEIPER GmbH & Co. KG, 67657 Kaiserslautern (DE)
(72) Erfinder: ASSMANN, Uwe, 42857 Remscheid (DE); KLEIN, Mario, 78176 Blumberg (DE); NOCK, Eckhard, 67551 Worms (DE)
(74) Vertreter: Patentanwälte Hosenthien-Held und Dr. Held
(86) Internationale Anmeldenummer: PCT/EP2002/009535
(87) Internationale Veröffentlichungsnummer: WO 2003/022622

(56) Entgegenhaltungen:
- EP-A- 0 169 096
- DE-A- 3 837 665
- FR-A- 2 783 209
- GB-A- 2 264 146

## Beschreibung

Die Erfindung betrifft einen Beschlag für einen Fahrzeugsitz mit den Merkmalen des Oberbegriffs des Anspruches 1.

Es ist bei Beschlägen dieser Art und anderen Einstellern, insbesondere bei Höheneinstellern, bekannt, das Gewicht der Baugruppe, die mit dem Beschlag zu bewegen ist, durch eine Kompensationsfeder, beispielsweise einer Schenkelfeder, auszugleichen. Der Kraftaufwand bei Betätigung des Beschlags in beide möglichen Betätigungsrichtungen unterscheidet sich dann nicht so stark.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß die Kompensationsfeder einerseits am ersten Beschlagteil und andererseits an einem mit der Achse fluchtenden Lagerbauteil des zweiten Beschlagteils abgestützt ist, steht eine einfache und schnelle Möglichkeit zur Verfügung, die Kompensationsfeder ohne viele Montageschritte an einen vorhandenen Beschlag zu montieren.

Die Befestigung der Kompensationsfeder erfolgt vorzugsweise auf einem Mehrkant oder Topf des Lagerbauteils, um die Kompensationsfeder in einer definierten Position zu Halten. Unter einem Mehrkant sollen alle Körper mit einer Längsachse verstanden werden, um die herum wenigstens zwei von einander unterschiedliche, parallel zur Längsachse verlaufende, ebene Flächen angeordnet sind, beispielsweise ein sogenannter Zweikant (zwei parallele, ebene Flächen und dazwischen gekrümmte Flächen), ein Dreikant (dreieckiger Querschnitt), ein Vierkant (i.d.R. quadratischer Querschnitt), etc.

Die Befestigung der Kompensationsfeder mittels Aufklemmen einer an ihr ausgebildeten Aufnahme auf den Mehrkant des Lagerbauteils hat den Vorteil, daß die Kompensationsfeder ohne Vorspannung gehalten wird, was beispielsweise weniger Windungen erfordert und ein geringeres Gewicht ermöglicht. Für diese Klemmbefestigung erzeugt vorzugsweise eine Vorspannkraft im Bereich der Aufnahme gegenüber dem Mehrkant einen Kraftschluß, welcher durch einen Formschluß aufgrund der geometrischen Übereinstimmungen zwischen Mehrkant und Aufnahme ergänzt wird. Zur Montage kann die Kompensationsfeder beispielsweise auf den Mehrkant aufgeschrumpft werden. Entsprechend den Anforderungen kann die Position des Federanfangs auf dem Mehrkant, beispielsweise auch durch die Wahl der Position einer Einstecköffnung gewählt werden. Axiale Sicherungsmittel für die Kompensationsfeder können am Mehrkant ausgebildet sein.

Die vorzugsweise auf der Außenseite des Beschlags vorgesehene Kompensationsfeder ist vorzugsweise an einem Ende mit der Aufnahme an dem Mehrkant des vorzugsweise über die Kontur der beiden Beschlagteile überstehenden Lagerbauteil und am anderen Ende an einem außenseitig abstehenden Bolzen des relativ zum Lagerbauteil beweglichen Beschlagteils abgestützt. Die Kompensationsfeder ist hierzu vorzugsweise spiralförmig aufgewickelt. Der Mehrkant ist vorzugsweise, aber nicht notwendigerweise am Lagerbauteil angeformt.

Die Erfindung ist sowohl für Beschläge mit Freischwenkfunktion - unabhängig von deren innerer Neigungseinstellkonstruktion - als auch für Gelenkbeschläge mit Tischstellungen, Packagestellungen, Bodenstellungen oder dergleichen einsetzbar. Die Anordnung der Beschlagteile als Beschlagoberteil und Beschlagunterteil und/oder auf den beiden Seiten des Fahrzeugsitzes hängt vom Einsatzzweck ab.

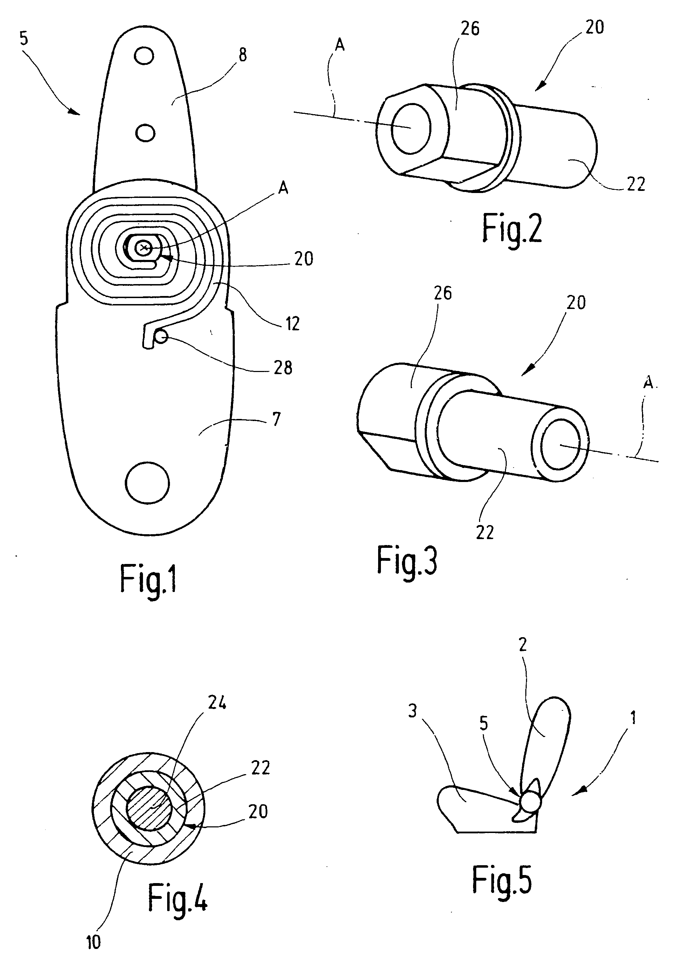

Im folgenden ist die Erfindung anhand von vier in der Zeichnung dargestellten Ausführungsbeispielen mit drei Abwandlungen näher erläutert. Es zeigen
- Fig. 1: eine Seitenansicht des Beschlags gemäß dem ersten Ausführungsbeispiel,
- Fig. 2: eine perspektivische Ansicht einer Hülse gemäß dem ersten Ausführungsbeispiel,
- Fig. 3: eine weitere perspektivische Ansicht der Hülse von Fig. 2,
- Fig. 4: einen Schnitt durch Lagerbolzen, Hülse und Schraube,
- Fig. 5: eine schematische Seitenansicht eines Fahrzeugsitzes,

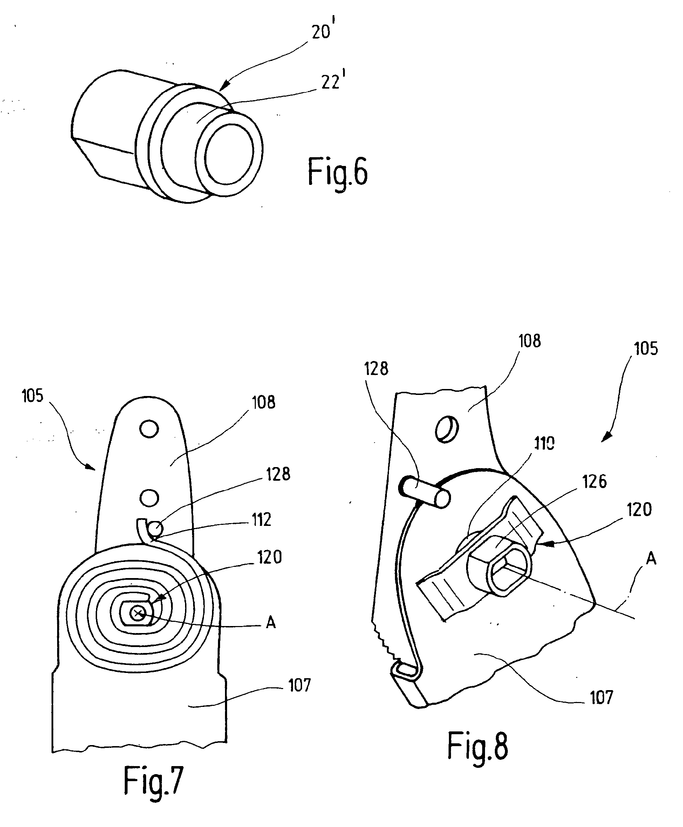

- Fig. 6: eine Fig. 3 entsprechende, perspektivische Ansicht einer Hülse gemäß einer Abwandlung des ersten Ausführungsbeispiels,
- Fig. 7: eine Seitenansicht des Beschlags gemäß dem zweiten Ausführungsbeispiel,
- Fig. 8: eine perspektivische Ansicht des Beschlags gemäß dem zweiten Ausführungsbeispiel ohne Kompensationsfeder,

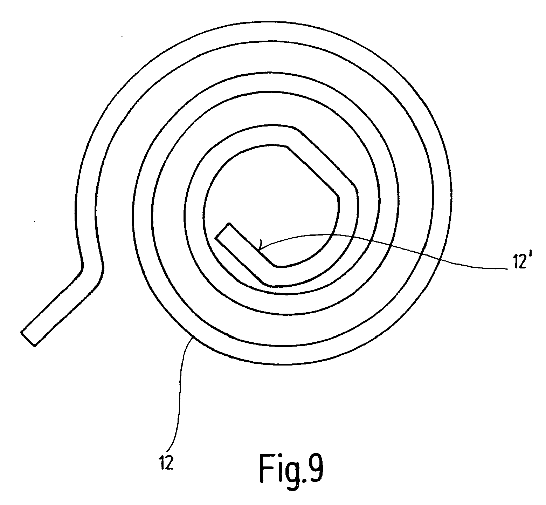

- Fig. 9: eine Einzelansicht der beispielhaften Kompensationsfeder,
- Fig. 10: eine Ansicht einer Kompensationsfeder gemäß dem dritten Ausführungsbeispiel,
- Fig. 11: eine Ansicht der Kompensationsfeder von Fig. 10 in einem stärker gespannten Zustand,

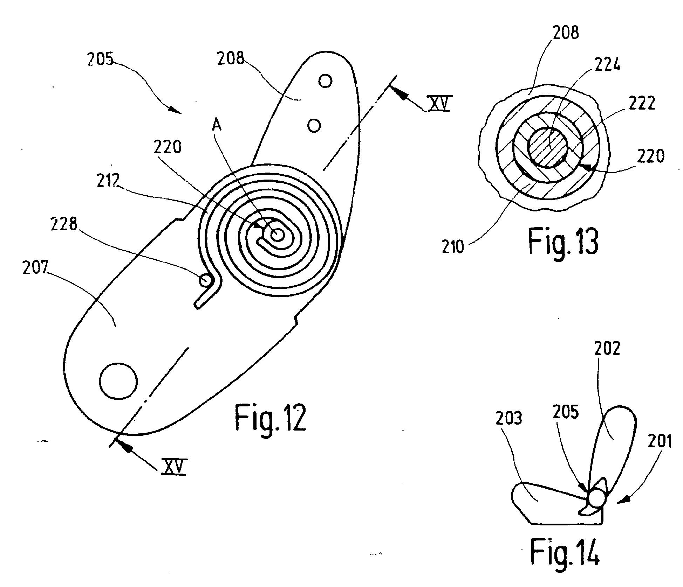

- Fig. 12: eine Seitenansicht des dritten Ausführungsbeispiels,

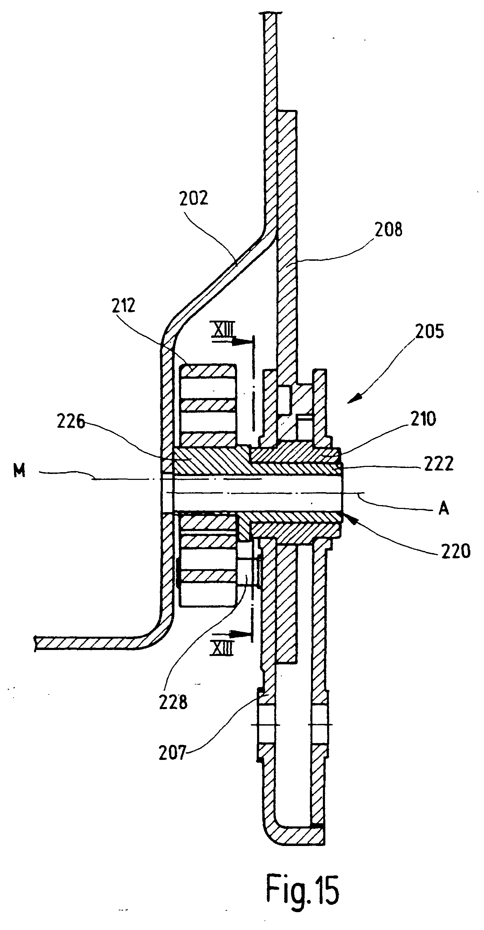

- Fig. 13: einen Schnitt durch Lagerbolzen, Hülse und Schraube entlang der Linie XIII-XIII in Fig. 15,
- Fig. 14: eine schematische Seitenansicht eines Fahrzeugsitzes,
- Fig. 15: einen Längsschnitt durch das dritte Ausführungsbeispiel entlang der Linie XV-XV in Fig. 12,
- Fig. 16: einen Längsschnitt durch eine Abwandlung zum dritten Ausführungsbeispiel,

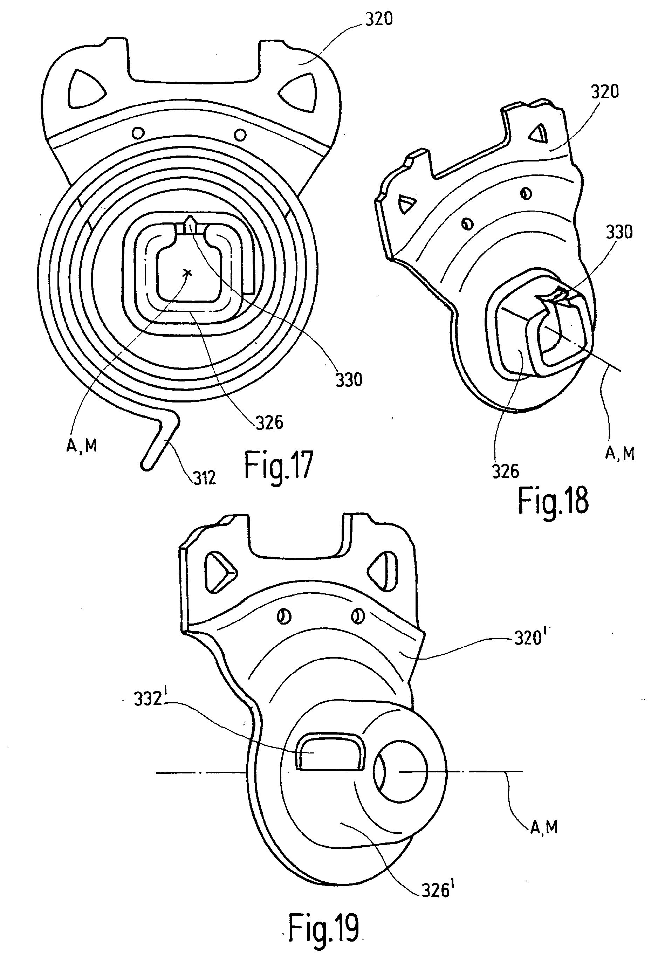

- Fig. 17: eine Teilansicht des vierten Ausführungsbeispiels,
- Fig. 18: eine perspektivische Ansicht des Lagerbauteils des vierten Ausführungsbeispiels, und
- Fig. 19: eine perspektivische Ansicht einer Abwandlung hierzu.

Bei einem ersten Ausführungsbeispiel weist ein Fahrzeugsitz 1 in einer hinteren Sitzreihe eines Kraftfahrzeuges zur Neigungseinstellung seiner Lehne 2 relativ zu seinem Sitzteil 3 auf beiden Seiten einen Beschlag 5 auf. Der als Rastbeschlag ausgebildete Beschlag 5 umfaßt ein sitzteilfestes Beschlagunterteil 7 und ein lehnenfestes Beschlagoberteil 8, welches mittels eines im Beschlagunterteil 7 auf die nachfolgend beschriebene Weise gelagerten Lagerbolzens 10 relativ zum Beschlagunterteil 7 schwenkbar ist. Das Beschlagunterteil 7 besteht dabei aus zwei plattenförmigen, parallel angeordneten Elementen, welche einen Bauraum zur Aufnahme des den Lagerbolzen 10 umschließenden Bereichs des Beschlagoberteils 8 und verschiedener Verriegelungs- und Sicherungselemente aufweist.

Die gedachte, zentrale Achse A des Lagerbolzens 10 definiert die Schwenkachse der Lehne 2 und die nachfolgend als axial bezeichnete Richtung. Eine Kompensationsfeder 12 aus Federstahl ist spiralförmig um die Achse A gewickelt und einerseits am Beschlagunterteil 7 und andererseits am Beschlagoberteil 8 abgestützt. Die als Flachbandfeder ausgebildete Kompensationsfeder 12 weist ein rechteckiges Querschnittsprofil auf, dessen größere Abmessung jeweils in axialer Richtung verläuft.

In diesem ersten Ausführungsbeispiel ist der oberteilfeste Lagerbolzen 10 in axialer Richtung mit einer durchgängigen Längsbohrung versehen, in welche als Lagerbauteil eine Hülse 20 mit einem zylindrischen Abschnitt 22 eingeschoben ist. Die Hülse 20 ist beispielsweise mittels einer in axialer Richtung verlaufenden Schraube 24 mit der Struktur der Lehne 2 verbunden, wobei der zylindrische Abschnitt 22 ein Innengewinde aufweist.

An den zylindrischen Abschnitt 22 schließt sich in axialer Richtung ein Zweikant-Abschnitt 26 an, mit welchem die Hülse 20 über den Lagerbolzen 10 und damit über die Kontur des Beschlags 5 übersteht. Zur drehfesten Abstützung der Kompensationsfeder 12 ist deren inneres Ende als Aufnahme 12' ausgebildet, welche auf den oberteilfesten Zweikant-Abschnitt 26 geklemmt ist, und zwar im wesentlichen, d.h. über weite Bereiche, kraftschlüssig aufgrund einer Vorspannung im Federstahl der Aufnahme 12', beispielsweise aufgrund eines gegenüber den Abmessungen des Zweikant-Abschnittes 26 geringeren Abstandes der ebenen Flächen, wobei vorzugsweise die Ähnlichkeit der Geometrien zumindest bereichsweise, beispielsweise im gekrümmten Bereich, zu einem ergänzenden Formschluß führt. Die Kompensationsfeder 12 sitzt damit auch ohne Vorspannung fest.

Das äußere Ende der Kompensationsfeder 12 liegt in den aufrechten und den nach hinten geneigten Stellungen der Lehne 2 mit Vorspannung an einem unterteilfesten Anschlagbolzen 28 an. Der Anschlagbolzen 28 steht von der Außenseite des Beschlagunterteils 7 ab und ist parallel zum Zweikant-Abschnitt 26 angeordnet. Eine Schwenkbewegung des Beschlagoberteils 8 nach vorne wird durch die Vorspannung der Kompensationsfeder 12 unterstützt, um einen guten Halt des Insassens durch die Lehne 2 zu erreichen oder ein Freischwenken der Lehne zu unterstützen. Dabei steht die Kompensationsfeder 12 ab einer Neigung der Lehne 2 von etwa 10° nach vorne selbständig ohne Vorspannung, d.h. sie löst sich vom Anschlagbolzen 28. Das Gewicht der Lehne 2 unterstützt dann die weitere Bewegung nach vorne.

In einer Abwandlung zum ersten Ausführungsbeispiel, welche - soweit nicht anders beschrieben - mit dem ersten Ausführungsbeispiel übereinstimmt, ist der zylindrische Abschnitt 22' der Hülse 20' kürzer als im ersten Ausführungsbeispiel ausgebildet, in eine Sacklochbohrung des Lagerbolzens 10 gesteckt und wiederum mit der Struktur der Lehne 2 drehfest verbunden.

Das zweite Ausführungsbeispiel stimmt in vielen Teilen mit dem ersten Ausführungsbeispiel überein, so daß gleiche und gleichwirkende Bauteile um 100 höhere Bezugszeichen tragen. Der Beschlag 105 weist wiederum ein Beschlagunterteil 107 und ein Beschlagoberteil 108 auf, welches mittels eines Lagerbolzens 110 relativ zum Beschlagunterteil 107 um eine durch den Lagerbolzen 110 definierte Achse A schwenkbar ist. Von der Außenseite des Beschlagunterteils 107 steht im Bereich des Lagerbolzens 110 seitlich ein angeschweißtes Lagerblech 120 als Lagerbauteil ab, welches im wesentlichen quer zur Achse A angeordnet ist und einen mit der Achse A fluchtenden Zweikant-Abschnitt 126 aufweist. Ein oberteilfester Anschlagbolzen 128 steht parallel zur Achse A und zum Zweikant-Abschnitt 126 von der Außenseite des Beschlagoberteils 108 ab. Eine Kompensationsfeder 112, welche wie im ersten Ausführungsbeispiel ausgebildet ist, ist mit einer Aufnahme an ihrem inneren Ende auf den Zweikant-Abschnitt 126 geklemmt und mit ihrem äußeren Ende am Anschlagbolzen 128 abgestützt. Die Funktionsweise stimmt mit dem ersten Ausführungsbeispiel überein.

Im dritten Ausführungsbeispiel weist ein Fahrzeugsitz 201 in einer hinteren Sitzreihe eines Kraftfahrzeuges zur Neigungseinstellung seiner Lehne 202 relativ zu seinem Sitzteil 203 auf beiden Seiten einen Beschlag 205 auf. Der als Rastbeschlag ausgebildete Beschlag 205 umfaßt ein sitzteilfestes Beschlagunterteil 207 und ein lehnenfestes Beschlagoberteil 208, welches auf einem Lagerbolzen 210, der mit dem Beschlagunterteil 207 verpresst ist, gelagert und relativ zum Beschlagunterteil 207 schwenkbar ist. Das Beschlagunterteil 207 besteht dabei aus zwei plattenförmigen, parallel angeordneten Elementen, welche einen Bauraum zur Aufnahme des den Lagerbolzen 210 umschließenden Bereichs des Beschlagoberteils 208 und verschiedener Verriegelungs- und Sicherungselemente aufweist.

Die gedachte, zentrale Achse A des Lagerbolzens 210 definiert die Schwenkachse der Lehne 202 und die nachfolgend als axial bezeichnete Richtung. Eine Kompensationsfeder 212 aus Federstahl ist in einer Ebene senkrecht zur Achse A spiralförmig gewickelt und als Kompensationsfeder einerseits am Beschlagunterteil 207 und andererseits am Beschlagoberteil 208 abgestützt. Die im Zentrum der Spirale befindliche Mitte der Kompensationsfeder 212 ist mit M bezeichnet. Die als Flachbandfeder ausgebildete Kompensationsfeder 212 weist ein rechteckiges Querschnittsprofil auf, dessen größere Abmessung jeweils in axialer Richtung verläuft.

Der beschlagunterteilfeste Lagerbolzen 210 ist in axialer Richtung mit einer durchgängigen Längsbohrung versehen, in welche als relativ zum Lagerbolzen 210 drehbares Lagerbauteil eine Hülse 220 mit einem zylindrischen Abschnitt 222 eingeschoben ist. Die Hülse 220 ist beispielsweise mittels einer Schraube 224 mit der Struktur der Lehne 202 verbunden und/oder mit der Struktur der Lehne 202 verpresst.

An den zylindrischen Abschnitt 222 schließt sich in axialer Richtung ein Zweikant-Abschnitt 226 an, dessen durch die Mitte M der Kompensationsfeder 212 verlaufende Symmetrieachse versetzt zu der mit der Achse A zusammenfallenden Symmetrieachse des zylindrischen Abschnitts 222 angeordnet ist. Mit diesem exzentrisch (außermittig) angeordneten Zweikant-Abschnitt 226 steht die Hülse 220 über den Lagerbolzen 210 und damit über die Kontur des Beschlags 205 über.

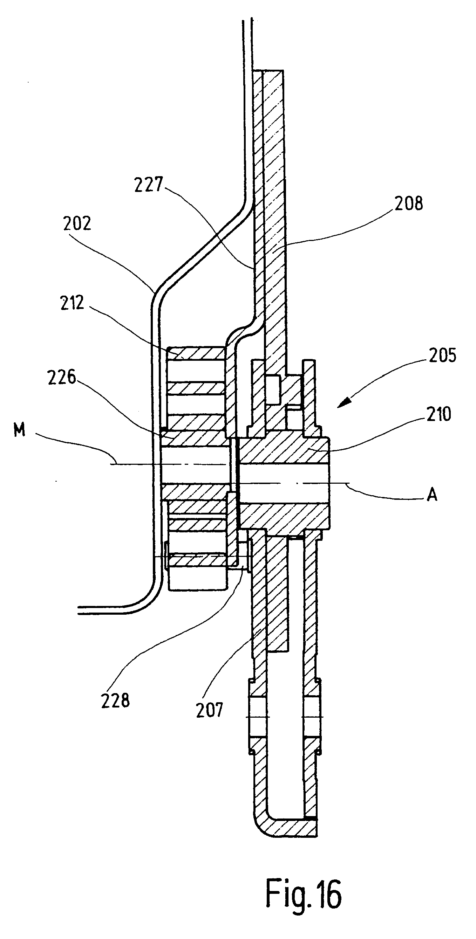

In einer abgewandelten Ausführung gemäß Fig. 16 ist von der Hülse 220 nur noch der Zweikant-Abschnitt 226 vorhanden, welcher mit einer Adapterlasche 227 verpresst und über dieser mit dem Beschlagoberteil 208 verbunden ist. Ansonsten stimmen die Ausführungen überein.

Zur drehfesten Abstützung der Kompensationsfeder 212 ist deren inneres Ende als Aufnahme 212' ausgebildet, welche auf den oberteilfesten (d.h. lehnenfesten) Zweikant-Abschnitt 226 geklemmt ist, und zwar im wesentlichen, d.h. über weite Bereiche, kraftschlüssig aufgrund einer Vorspannung im Federstahl der Aufnahme 212', beispielsweise aufgrund eines gegenüber den Abmessungen des Zweikant-Abschnittes 226 geringeren Abstandes der ebenen Flächen, wobei vorzugsweise die Ähnlichkeit der Geometrien zumindest bereichsweise, beispielsweise im gekrümmten Bereich, zu einem ergänzenden Formschluß führt. Die Kompensationsfeder 212 sitzt damit auch ohne Vorspannung fest.

Das äußere Ende der Kompensationsfeder 212 liegt in den aufrechten und den nach hinten geneigten Stellungen der Lehne 202 mit Vorspannung an einem unterteilfesten Anschlagbolzen 228 an. Der Anschlagbolzen 228 steht von der Außenseite des Beschlagunterteils 207 ab und ist parallel zum Zweikant-Abschnitt 226 angeordnet. Eine Schwenkbewegung des Beschlagoberteils 208 nach vorne wird durch die Vorspannung der Kompensationsfeder 212 unterstützt, um beispielsweise ein Freischwenken der Lehne 202 zu unterstützen. Dabei ist die Kompensationsfeder 212 ab einer Neigung der Lehne 202 von etwa 10° von der Senkrechten aus nach vorne vorspannungsfrei, d.h. sie löst sich vom Anschlagbolzen 228. Das Gewicht der Lehne 202 unterstützt eine weitere Bewegung nach vorne.

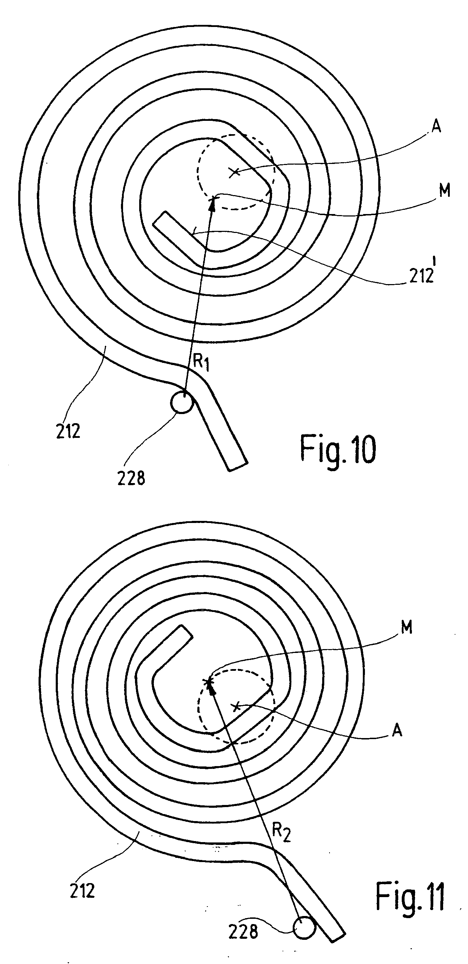

Durch die spezielle Ausbildung der Hülse 220 mit der exzentrischen Anordnung des Zweikant-Abschnittes 226 relativ zum zylindrischen Abschnitt 222 wirkt die Kompensationsfeder 212 im Beschlag 205 mit einer nichtlinearen Kennlinie. Das Federmoment ergibt sich als vektorielles Produkt zwischen der dem Abstand der Mitte M der Kompensationsfeder 212 zum Anschlagbolzen 228 und der Kraft der Kompensationsfeder 212. Beim Schwenken der Lehne 202 und gleichzeitigem Spannen (oder Entspannen) der Kompensationsfeder 212 ändert sich dieser Abstand. In der beispielhaft in Fig. 10 dargestellten Designstellung ist dieser als Hebelarm wirkende Abstand mit R₁ bezeichnet. Durch ein weiteres Schwenken der Lehne 202 nach hinten wird die Kompensationsfeder 212 gespannt und dieser Hebelarm vergrößert sich auf R₂. Da in der Regel die Kraft der Kompensationsfeder 212 näherungsweise linear vom Schwenkwinkel des Beschlagoberteils 208 abhängt, wächst das Federmoment vorliegend nichtlinear an. Je nach Ausrichtung und Ausmaß der Exzentrizität der Hülse 220 kann eine progressive oder degressive Kennlinie erzielt werden.

Im vierten Ausführungsbeispiel, welches weitgehend dem zweiten Ausführungsbeispiel gleicht, ist eine Kompensationsfeder 312 für einen nicht näher dargestellten Rastbeschlag vorgesehen. Dessen Beschlagoberteil und Beschlagunterteil, welche näherungsweise plattenförmig ausgebildet und um eine Achse A relativ zueinander verschwenkbar sind, werden durch Haltebleche 320 in axialer Richtung der Achse A zusammengehalten. Eines dieser Haltebleche 320, vorliegend dasjenige des Beschlagoberteils, ist als Lagerbauteil für die Kompensationsfeder 312 ausgebildet, indem im Bereich der Achse A ein Vierkant-Abschnitt 326 aus dem Halteblech 320 gezogen ist. Auf diesem Vierkant-Abschnit 326 sitzt die spiralförmige Kompensationsfeder 312 mit ihrem inneren Ende, vorzugsweise aufgeklemmt wie in den anderen Ausführungsbeispielen. Die Position des Federanfangs und damit die Ausrichtung der Kompensationsfeder 312 im entspannten Zustand ist entsprechend der Anforderungen wählbar. Der Mehrkant kann auch gegenüber der in der Zeichnung dargestellten Position gedreht sein, beispielsweise um etwa 45°, also mit den Ecken nach oben bzw. unten weisen.

Für den axialen Halt der Kompensationsfeder 312 ist eine Haltenase 330 aus dem Material des Vierkant-Abschnitts 326 mit axialen Schnittlinien herausgeschnitten und - abgestimmt auf die Breite der Kompensationsfeder 312 - radial nach außen gebogen. Das andere, äußere Ende der Kompensationsfeder 312 liegt unter Vorspannung an einem nicht näher dargestellten Anschlagbolzen des Beschlagunterteils an. Die Funktionsweise des vierten Ausführungsbeispiels stimmt mit den anderen Ausführungsbeispielen überein, insbesondere mit dem ersten und zweiten Ausführungsbeispiel. Statt dem Vierkant-Abschnitt kann auch ein Sechskant-Abschnitt oder ein Achtkant-Abschnitt oder ein Abschnitt mit einem anderen Mehrkant vorgesehen sein.

In einer Abwandlung hierzu ist aus einem als Lagerbauteil dienenden-Halteblech 320' ein Topf 326' mit kreisförmigem Profil gezogen. Für den Federanfang ist zum Einhängen eine Einstecköffnung 332' in die Mantelfläche des Topfes 326' geschnitten. Die Einstecköffnung 332' sichert die Kompensationsfeder zugleich in axialer Richtung. Die Einstecköffnung 332' wird nach dem Ziehen des Topfes 326' eingeschnitten, so daß die Position der Einstecköffnung 332' - und damit die Ausrichtung der Kompensationsfeder im entspannten Zustand - entsprechend den Anforderungen wählbar ist. Die Abmessung der Einstecköffnung 332' in axialer Richtung ist auf die Breite der Kompensationsfeder abgestimmt.

Sowohl bei diesem Ausführungsbeispiel als auch bei den beiden ersten Ausführungsbeispielen kann die Mitte M der Kompensationsfeder versetzt zur Achse A angeordnet sein, wie im dritten Ausführungsbeispiel näher erläutert ist.

### Bezugszeichenliste

- 1, 201: Fahrzeugsitz
- 2,202: Lehne
- 3, 203: Sitzteil
- 5, 105, 205: Beschlag
- 7, 107, 207: Beschlagunterteil
- 8, 108, 208: Beschlagoberteil
- 10, 110, 210: Lagerbolzen
- 12, 112, 212, 312: Kompensationsfeder
- 12',212': Aufnahme
- 20, 20', 220: Hülse, Lagerbauteil
- 22, 22', 222: zylindrischer Abschnitt
- 24, 224: Schraube
- 26, 126, 226: Zweikant-Abschnitt, Mehrkant
- 28, 128, 228: Anschlagbolzen
- 120: Lagerblech, Lagerbauteil
- 227: Adapterlasche
- 320, 320': Halteblech, Lagerbauteil
- 326: Vierkant-Abschnitt, Mehrkant
- 326': Topf
- 330: Haltenase, Haltemittel
- 332': Einstecköffnung
- A: Achse
- M: Mitte
- R₁, R₂: Hebelarm

## Patentansprüche

1. Beschlag für einen Fahrzeugsitz, insbesondere für einen Kraftfahrzeugsitz, mit einem ersten Beschlagteil (7; 108; 207), mit einem zweiten Beschlagteil (8; 107; 208), welches relativ zum ersten Beschlagteil (7; 108; 207) um eine durch einen Lagerbolzen (10; 110; 210) definierte Achse (A) schwenkbar ist, und mit einer Kompensationsfeder (12; 112; 212; 312), welche zwischen dem ersten Beschlagteil (7; 108; 207) und dem zweiten Beschlagteil (8; 107; 208) durch eine Vorspannung wirksam ist, **dadurch gekennzeichnet, daß** die Kompensationsfeder (12; 112; 212; 312) einerseits am ersten Beschlagteil (7; 108; 207) und andererseits an einem mit der Achse (A) fluchtenden Lagerbauteil (20; 20'; 120; 220; 320; 320') des zweiten Beschlagteils (8; 107; 208) abgestützt ist.

2. Beschlag nach Anspruch 1, **dadurch gekennzeichnet, daß** die Kompensationsfeder (212) spiralförmig aufgewickelt ist, wobei die Mitte (M) der Kompensationsfeder (212) exzentrisch zur Achse (A) angeordnet ist.

3. Beschlag nach Anspruch 1 oder 2, **dadurch gekennzeichnet, daß** das Lagerbauteil (20; 20'; 120; 220; 320; 320') einen Mehrkant (26; 126; 226; 326) oder einen Topf (326') aufweist.

4. Beschlag nach Anspruch 3, **dadurch gekennzeichnet, daß** die Kompensationsfeder (12; 112; 312) spiralförmig aufgewickelt ist und mit ihrem inneren Ende auf dem Mehrkant (26; 126; 326) bzw. dem Topf (326') sitzt.

5. Beschlag nach Anspruch 3 und 4, **dadurch gekennzeichnet, daß** der Mehrkant (226) exzentrisch zur Achse (A) versetzten am Lagerbauteil (220) vorgesehen ist.

6. Beschlag nach Anspruch 4 oder 5, **dadurch gekennzeichnet, daß** die Kompensationsfeder (12; 112; 312) an ihrem inneren Ende eine Aufnahme (12') aufweist, welche auf den Mehrkant (26; 126; 326) des Lagerbauteils (20; 20'; 120; 320) geklemmt ist, wobei die Aufnahme (12') und der Mehrkant (26; 126; 326) über weite Bereiche kraftschlüssig und zumindest bereichsweise formschlüssig zusammenwirken.

7. Beschlag nach einem der Ansprüche 3 bis 6, **dadurch gekennzeichnet, daß** der Mehrkant (326) Haltemittel (330) zur axialen Sicherung der Kompensationsfeder (312) aufweist.

8. Beschlag nach einem der Ansprüche 2 bis 7, **dadurch gekennzeichnet, daß** die Kompensationsfeder (12; 112; 212; 312) mit ihrem äußeren Ende an einem Anschlagbolzen (28; 128; 228) des ersten Beschlagteils (7; 108; 207) anliegt.

9. Beschlag nach Anspruch 8, **dadurch gekennzeichnet, daß** der Abstand des Anschlagbolzens (228) zur Mitte (M) der Kompensationsfeder (212) den Hebelarm (R₁, R₂) für das Federmoment definiert., wobei der Hebelarm (R₁, R₂) für das Federmoment sich in Abhängigkeit des Winkels zwischen dem Beschlagoberteil (208) und dem Beschlagunterteil (207) ändert.

10. Beschlag nach einem der Ansprüche 1 bis 9, **dadurch gekennzeichnet, daß** das Federmoment sich in Abhängigkeit des Winkels zwischen dem Beschlagoberteil (208) und dem Beschlagunterteil (207) nichtlinear ändert.

11. Beschlag nach einem der Ansprüche 1 bis 10, **dadurch gekennzeichnet, daß** ein zur Achse (A) symmetrischer Abschnitt (22; 22'; 222) des Lagerbauteils (20; 20'; 220) innerhalb des Lagerbolzens (10; 210) angeordnet ist.

12. Beschlag nach einem der Ansprüche 1 bis 11, **dadurch gekennzeichnet, daß** die Kompensationsfeder (12; 112; 212; 312) auf der Außenseite des Beschlags (5; 105; 205) angeordnet ist, wobei das Lagerbauteil (20; 20', 120; 220; 320; 320') über die Kontur der Beschlagteile (7, 8; 107, 108; 207, 208) übersteht.

13. Fahrzeugsitz, insbesondere Kraftfahrzeugsitz, **gekennzeichnet durch** einen Beschlag (5; 105) nach einem der Ansprüche 1 bis 12.

## Claims

1. Fitting for a vehicle seat, particularly a motor vehicle seat, having a first fitting part (7; 108; 207) and a second fitting part (8; 107; 208) that is pivotable relative to the first fitting part (7; 108; 207) around an axis (A) defined by a bearing bolt (10; 110; 210), and having a compensation spring (12; 112; 212; 312), acting between the first fitting part (7; 108; 207) and the second fitting part (8; 107; 208) through pre-tension, **characterized in that** the compensation spring (12; 112; 212; 312) bears, on one side, on the first fitting part (7; 108; 207) and, on the other side, on a bearing component (20; 20'; 120; 220; 320; 320') of the second fitting part (8; 107; 208) aligned with the axis (A).

2. Fitting according to Claim 1, **characterized in that** the compensation spring (212) is spirally coiled, the centre (M) of the compensation spring (212) being arranged excentrically to the axis.

3. Fitting according to Claim 1 or 2, **characterized in that** the bearing component (20; 20'; 120; 220; 320; 320') is in the shape of a polyhedron (26; 126; 226; 326) or bowl (326').

4. Fitting according to Claim 3, **characterized in that** the compensation spring (12; 112; 312) is spirally coiled, its inner end sitting on the polyhedron (26; 126; 326) or the bowl (326').

5. Fitting according to Claims 3 and 4, **characterized in that** the polyhedron (226) is arranged excentrically to the axis (A) on the bearing component (220).

6. Fitting according to Claim 4 or 5, **characterized in that** the compensation spring (12; 112; 312) has a receiver (12') in its inner end clamped onto the polyhedral element (26; 126; 326) of the bearing component (20; 20'; 120; 320), the receiver (12') and the polyhedral element (26; 126; 326) interacting over a large surface through friction connection and, at least in some areas, through profile/interlocking connection.

7. Fitting according to one of Claims 3 to 6, **characterized in that** the polyhedron (326) has holding lugs (330) for axially securing the compensation spring (312).

8. Fitting according to one of Claims 2 to 7, **characterized in that** the outer end of the compensation spring (12; 112; 212; 312) bears against a stop pin (28; 128; 228) of the first fitting part (7; 108; 207).

9. Fitting according to Claim 8, **characterized in that** the distance between the stop pin (228) and the centre (M) of the compensation spring (212) defines the lever (R₁, R₂) for the spring momentum, the lever (R₁, R₂) for the spring momentum changing in dependence from the angle between the upper fitting part (208) and the lower fitting part (207).

10. Fitting according to one of Claims 1 to 9, **characterized in that** the spring momentum changes in dependence from the angle between the upper fitting part (208) and the lower fitting part (207) in a non-linear manner.

11. Fitting according to one of Claims 1 to 10, **characterized in that** a section (22; 22'; 222) of the bearing component (20; 20'; 220) symmetrical to the axis (A) is arranged inside the bearing bolt (10; 210).

12. Fitting according to one of Claims 1 to 11, **characterized in that** the compensation spring (12; 112; 212; 312) is arranged on the outside of the fitting (5; 105; 205), the bearing component (20; 20', 120; 220; 320; 320') extending beyond the contour of the fitting parts (7, 8; 107, 108; 207, 208).

13. Vehicle seat, particularly a motor vehicle seat, **characterized by** a fitting (5; 105) according to one of Claims 1 to 12.

## Revendications

1. Armature pour un siège de véhicule, en particulier pour un siège de véhicule automobile, avec une première partie d'armature (7 ; 108 ; 207), avec une deuxième partie d'armature (8 ; 107 ; 208), laquelle est apte à pivoter par rapport à la première partie d'armature (7 ; 108 ; 207) autour d'un axe (A) défini par un axe de palier (10 ; 110 ; 210), et avec un ressort de compensation (12 ; 112 ; 212 ; 312), lequel agit entre la première partie d'armature (7 ; 108 ; 207) et la deuxième partie d'armature (8 ; 107 ; 208) par une prétension, **caractérisée par le fait que** le ressort de compensation (12 ; 112 ; 212 ; 312) est appuyé, d'une part, sur la première partie d'armature (7 ; 108 ; 207) et, d'autre part, sur un composant de palier (20 ; 20' ; 120 ; 220 ; 320 ; 320') s'alignant avec l'axe (A) de la deuxième partie d'armature (8 ; 107 ; 208).

2. Armature selon la revendication 1, **caractérisée par le fait que** le ressort de compensation (212) est enroulé sous la forme d'une spirale, à l'occasion de quoi le milieu (M) du ressort de compensation (212) est disposé de façon excentrée par rapport à l'axe (A).

3. Armature selon l'une des revendications 1 ou 2, **caractérisée par le fait que** le composant de palier (20 ; 20' ; 120 ; 220 ; 320 ; 320') présente un multi-pans (26 ; 126 ; 226 ; 326) ou une coupelle (326').

4. Armature selon la revendication 3, **caractérisée par le fait que** le ressort de compensation (12 ; 112 ; 312) est enroulé sous la forme d'une spirale et est en appui par son extrémité interne sur le multi-pans (26 ; 126 ; 326) ou la coupelle (326').

5. Armature selon les revendications 3 et 4, **caractérisée par le fait que** le multi-pans (226) est prévu de façon excentrée par rapport à l'axe (A), décalé sur le composant de palier (220).

6. Armature selon l'une des revendications 4 ou 5, **caractérisée par le fait que** le ressort de compensation (12 ; 112 ; 312) présente sur son extrémité interne un élément de réception (12'), lequel est serré sur le multi-pans (26 ; 126 ; 326) du composant de palier (20 ; 20' ; 120 ; 320), à l'occasion de quoi l'élément de réception (12') et le multi-pans (26 ; 126 ; 326) coopèrent sur de larges zones par l'influence de la force et au moins par zones par l'influence de la forme.

7. Armature selon l'une des revendications 3 à 6, **caractérisée par le fait que** le multi-pans (326) présente des moyens de retenue (330) pour le blocage axial du ressort de compensation (312).

8. Armature selon l'une des revendications 2 à 7, **caractérisée par le fait que** le ressort de compensation (12 ; 112 ; 212 ; 312) porte par son extrémité externe sur un boulon de butée (28 ; 128 ; 228) de la première partie d'armature (7 ; 108 ; 207).

9. Armature selon la revendication 8, **caractérisée par le fait que** la distance du boulon de butée (228) au milieu (M) du ressort de compensation (212) définit le bras de levier (R₁, R₂) pour le moment du ressort, à l'occasion de quoi le bras de levier (R₁, R₂) pour le moment du ressort change en fonction de l'angle entre la partie supérieure d'armature (208) et la partie inférieure d'armature (207).

10. Armature selon l'une des revendications 1 à 9, **caractérisée par le fait que** le moment du ressort change de façon non linéaire en fonction de l'angle entre la partie supérieure d'armature (208) et la partie inférieure d'armature (207).

11. Armature selon l'une des revendications 1 à 10, **caractérisée par le fait qu'**une section (22 ; 22' ; 222) symétrique par rapport à l'axe (A) du composant de palier (20 ; 20' ; 220) est disposée à l'intérieur de l'axe de palier (10 ; 210).

12. Armature selon l'une des revendications 1 à 11, **caractérisée par le fait que** le ressort de compensation (12 ; 112 ; 212 ; 312) est disposé sur le côté externe de l'armature (5 ; 105 ; 205), à l'occasion de quoi le composant de palier (20 ; 20' ; 120 ; 220 ; 320 ; 320') dépasse sur le contour des parties d'armature (7, 8 ; 107, 108 ; 207, 208).

13. Siège de véhicule, en particulier, siège de véhicule automobile, **caractérisé par** une armature (5 ; 105) telle que définie à l'une des revendications 1 à 12.
